(19) Europäisches Patentamt
European Patent Office
Office européen des brevets

(11) EP 1 836 907 B1

# (12) EUROPEAN PATENT SPECIFICATION

(45) Date of publication and mention of the grant of the patent:
**05.08.2015 Bulletin 2015/32**

(21) Application number: **06700828.4**

(22) Date of filing: **11.01.2006**

(51) Int Cl.:
*A23L 1/31* (2006.01) *A23L 1/318* (2006.01)
*A23L 1/325* (2006.01) *A23L 1/33* (2006.01)
*A23L 1/333* (2006.01) *C12N 15/09* (2006.01)
*A23L 1/314* (2006.01) *A23L 1/317* (2006.01)

(86) International application number:
**PCT/JP2006/300573**

(87) International publication number:
**WO 2006/075771 (20.07.2006 Gazette 2006/29)**

## (54) PROCESSED MEAT PRODUCT OR FISH PASTE PRODUCT AND PROCESS FOR PRODUCING THE SAME

FLEISCHVERARBEITUNGSPRODUKT ODER FISCHPASTENPRODUKT UND VERFAHREN ZUR DEREN HERSTELLUNG

PRODUIT A BASE DE VIANDE TRANSFORMEE OU PRODUIT A BASE DE PATE DE POISSON ET PROCEDE POUR LES PRODUIRE

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.01.2005 JP 2005005853**

(43) Date of publication of application:
**26.09.2007 Bulletin 2007/39**

(73) Proprietors:
- **Ajinomoto Co., Inc.**
  **Tokyo 104-8315 (JP)**
- **Amano Enzyme Inc.**
  **Nagoya-shi,**
  **Aichi 460-0003 (JP)**

(72) Inventors:
- **MIWA, Noriko**
  **-ku, Kawasaki-shi, Kanagawa, 2108681 (JP)**
- **NAKAGOSHI, Hiroyuki**
  **-ku, Kawasaki-shi, Kanagawa, 2108681 (JP)**
- **HIROSE, Fumiyuki**
  **-ku, Kawasaki-shi, Kanagawa, 2108681 (JP)**
- **NAKAMURA, Nami**
  **-ku, Kawasaki-shi, Kanagawa, 2108681 (JP)**
- **KODERA, Tomohiro**
  **-ku, Kawasaki-shi, Kanagawa, 2108681 (JP)**
- **WAKABAYASHI, Hidehiko**
  **-ku, Kawasaki-shi, Kanagawa, 2108681 (JP)**

(74) Representative: **Strehl Schübel-Hopf & Partner**
**Maximilianstrasse 54**
**80538 München (DE)**

(56) References cited:
**WO-A1-97/43910** **WO-A1-2004/004489**
**WO-A2-01/28353** **JP-A- 3 098 552**
**JP-A- 4 148 663** **JP-A- 6 225 704**
**JP-A- 7 184 606** **JP-A- 8 080 176**
**JP-A- 10 057 013** **JP-A- 2000 050 887**
**JP-A- 2000 515 003** **JP-A- 2001 218 590**
**US-A- 5 082 672** **US-A- 6 149 950**

- **OKAYAMA T ET AL: "Effect of glutaminase preparation from Bacillussubtilis GT strain on sensory evaluation of processed meat products.", FLEISCHWIRTSCHAFT, vol. 78, no. 1, 1998, pages 41-42, XP8152884,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

SEQUENCE LISTING

<110> Ajinomoto Co., Inc.

<120> Processed meat products, fish paste products and process for them

<130> EPA-64302

<160> 14

<170> PatentIn version 3.1

<210> 1

<211> 963

<212> DNA

<213> Chyrseobacterium proteolytioum <220>

<221> misc_feature

<223> protein glutaminase; nucleotide sequence

<400> 1

atgaagaacc ttttcctgtc catgatggcc ttcgtgaccg tcctcacctt caactcctgc 60
gccgattcca acggcaacca ggaaatcaac ggcaaggaga agctttccgt taacgattct 120
aagctgaagg atttcggcaa gaccgttccg gttggcatcg acgaagagaa cggcatgatc 180
aaggtgtcct tcatgttgac tgcgcagttc tacgagatca agccaaccaa ggaaaacgag 240
cagtacatcg gtatgcttcg ccaggctgtt aagaacgaat ctccagtcca cattttcctc 300
aagccaaaca gcaatgaaat cggcaaggtg gagtctgcat ccccagagga cgtccgctac 360
ttcaagacga tcctgaccaa agaagtcaag ggccagacca acaaattggc gtccgtcatt 420
ccagatgtgg ctaccctcaa ctctctcttc aaccaaatca agaaccagtc ttgcggtacc 480
tctacggcgt cctccccatg catcaccttc cgctacccag tcgacggctg ctacgcacgc 540
gcccacaaga tgcgccagat cttgatgaac aacggctatg actgtgagaa gcaattcgtg 600
tacggtaacc tcaaggcatc caccggcacc tgctgcgtgg cgtggagcta ccacgttgca 660
atcttggtga gctacaaaaa cgcttccggc gtgacggaaa aacgcattat tgatccatcc 720
ctttttcca gcggtcctgt gaccgatacc gcatggcgca acgcttgcgt taacacctct 780
tgcggctctg catccgtttc ctcttacgct aacaccgcag gaaatgttta ttaccgctcc 840
ccatccaatt cttacctgta tgacaacaat ctgatcaata ccaactgtgt cctgactaaa 900
ttctccctgc tttccggctg ttctccttca cctgcaccgg atgtctccag ctgtggattt 960
taa 963

<210> 2
<211> 320
<212> PRT
<213> Chyrseobacterium roteollyticum

<220>
<221> MISC_FEATURE
<223> protein glutaminase; amino acid sequence

<400> 2

Met Lys Asn Leu Phe Leu Ser Met Met Ala Phe Val Thr Val Leu Thr
1 5 10 15

Phe Asn Ser Cys Ala Asp Ser Asn Gly Asn Gln Glu Ile Asn Gly Lys
20 25 30

Glu Lys Leu Ser Val Asn Asp Ser Lys Leu Lys Asp Phe Gly Lys Thr
35 40 45

Val Pro Val Gly Ile Asp Glu Glu Asn Gly Met Ile Lys Val Ser Phe
50 55 60

Met Leu Thr Ala Gln Phe Tyr Glu Ile Lys Pro Thr Lys Glu Asn Glu
65 70 75 80

Gln Tyr Ile Gly Met Leu Arg Gln Ala Val Lys Asn Glu Ser Pro Val
85 90 95

His Ile Phe Leu Lys Pro Asn Ser Asn Glu Ile Gly Lys Val Glu Ser
100 105 110

Ala Ser Pro Glu Asp Val Arg Tyr Phe Lys Thr Ile Leu Thr Lys Glu
115 120 125

Val Lys Gly Gln Thr Asn Lys Leu Ala Ser Val Ile Pro Asp Val Ala
130 135 140

Thr Leu Asn Ser Leu Phe Asn Gln Ile Lys Asn Gln Ser Cys Gly Thr
145 150 155 160

Ser Thr Ala Ser Ser Pro Cys Ile Thr Phe Arg Tyr Pro Val Asp Gly
165 170 175

Cys Tyr Ala Arg Ala His Lys Met Arg Gln Ile Leu Met Asn Asn Gly
180 185 190

Tyr Asp Cys Glu Lys Gln Phe Val Tyr Gly Asn Leu Lys Ala Ser Thr
195 200 205

Gly Thr Cys Cys Val Ala Trp Ser Tyr His Val Ala Ile Leu Val Ser
210 215 220

Tyr Lys Asn Ala Ser Gly Val Thr Glu Lys Arg Ile Ile Asp Pro Ser
225 230 235 240

Leu Phe Ser Ser Gly Pro Val Thr Asp Thr Ala Trp Arg Asn Ala Cys
245 250 255

Val Asn Thr Ser Cys Gly Ser Ala Ser Val Ser Ser Tyr Ala Asn Thr
260 265 270

Ala Gly Asn Val Tyr Tyr Arg Ser Pro Ser Asn Ser Tyr Leu Tyr Asp
275 280 285

Asn Asn Leu Ile Asn Thr Asn Cys Val Leu Thr Lys Phe Ser Leu Leu
290 295 300

Ser Gly Cys Ser Pro Ser Pro Ala Pro Asp Val Ser Ser Cys Gly Phe
305 310 315 320

<210> 3
<211> 117
<212> DNA
<213> Escherichia coli

<220>
<221> misc_feature
<223> T or A signal sequence; nucleotide sequence

<400> 3

atgaacaata acgatctctt tcaggcatca cgtcggcgtt ttctggcaca actcggcggc 60

ttaaccgtcg ccgggatgct ggggccgtca ttgttaacgc cgcgacgtgc gactgcg 117

<210> 4
<211> 39
<212> PRT
<213> Escherichia coli

<220>
<221> MISC_FEATURE
<223> TorA signal peptide

<400> 4

Met Asn Asn Asn Asp Leu Phe Gln Ala Ser Arg Arg Arg Phe Leu Ala
1               5                   10                  15

Gln Leu Gly Gly Leu Thr Val Ala Gly Met Leu Gly Pro Ser Leu Leu
            20                  25                  30

Thr Pro Arg Arg Ala Thr Ala
        35

<210> 5
<211> 21
<212> DNA
<213> Artificial Sequence

<220>
<223> synthetic olygonucleotide

<400> 5
catgaagaac cttttcctgt c 21

<210> 6
<211> 26
<212> DNA
<213> Artificial Sequence

<220>
<223> synthetic olygonucleotide

<400> 6
gtaaaaggat ccattaatta aaatcc 26

<210> 7
<211> 25
<212> DNA
<213> Artificial Sequence

<220>
<223> synthetic olygonucleotide

<400> 7 "
atgaacaata acgatctctt tcagg 25

<210> 8
<211> 26
<212> DNA
<213> Artificial Sequence

<220>
<223> synthetic olygonucleotide

<400> 8
ccggatcctg gtcatgattt cacctg 26

<210> 9
<211> 26
<212> DNA
<213> Artificial Sequence

<220>
<223> synthetic olygonucleotide

<400> 9
aaattcctgt gaattagrtg atttag 26

<210> 10
<211> 43
<212> DNA
<213> Artificial Sequence

<220>
<223> synthetic olygonucleotide.

<400> 10
aagagatcgt tattgttcat agaggcgaag gctccttgaa tag 43

<210> 11
<211> 44
<212> DNA
<213> Artificial Sequence

<220>
<223> synthetic olygonucleotide

<400> 11
gatttcctgg ttgccgttgg aatccgcagt cgcacgtcgc ggcg 44

<210> 12
<211> 20
<212> DNA

<213> Artificial Sequence

<220>
<223> synthetic olygonucleotide

<400> 12
gattccaacg gcaaccagga 20

<210> 13
<211> 33
<212> DNA
<213> Artificial Sequence

<220>
<223> synthetic olygonuoleotide

<400> 13
cttggggccg aagcccttga cttctttggt cag 33

<210> 14
<211> 33
<212> DNA
<213> Artificial Sequence

<220>
<223> synthetic olygonucleotide

<400> 14
ttcggcccca agttggcgtc cgtcattcca gat 33

## Description

[Technical Field]

The present invention relates to a processed meat product or a fish paste product where a protein deamidating enzyme is used and also to a method for producing the same.

[Background Art]

As a supplying source for protein which is necessary for maintenance of life, humans have utilized meat represented by skeleton muscle tissues of mammals mainly comprising livestock and poultry and of birds, fish meat which is skeleton muscle tissues of fish and body tissues, organs, etc. of other vertebrate and invertebrate animals. The aforementioned protein food from animals contains common muscle proteins such as actin and myosin regardless of the source and they express the common characteristics for processing. For example, water-holding capacity, binding property, elasticity, gelling property, etc. are listed as functional characteristics of muscle proteins. Those characteristics greatly contribute to incorporation of fat and moisture into a paste product such as sausage and *kamaboko* (boiled fish paste) or to binding property, gelling property, etc. of restructured meat products. Muscle proteins having various functional characteristics as such are usually denatured when being subjected to a processing treatment such as heating, freezing, cooling and pressurizing. Denaturation of muscle proteins brings out flavors of the meat itself and imparts good taste, but on the other hand, that results in unfavorable problems from the viewpoint of processing such as generation of drips from meat tissues and decrease in the yield of the final product. Moreover, some materials result in bad effects on a sensory property such as that meat quality becomes tough and smoothness is lost causing a dry texture. When comparatively big meat blocks (meat pieces) among the meat are cooked such as in the case of beefsteak and deep fried breaded cutlet for example, tenderness and juiciness are important factors for serving delicious meals but the meat as mentioned above tends to become tough by heat cooking and meat juice also tends to be flown away and lost. In addition, when a fish paste product such as steamed *kamaboko* is heated too much, it tends to become hard excessively, to lose its smoothness and to increase separation of water therefrom.

For suppression of becoming tough of meat by a processing treatment, there have been already known a method where organic acid monoglyceride is used (See, Japanese Patent Application Laid-Open (Kokai) No. Sho 49/020,353), a method where a surfactant such as lecithin is used (See, Japanese Patent Application Laid-Open (Kokai) No. Hei 04/148,663), a method where salt or the like is used (See, Japanese Patent Application Laid-Open (Kokai) No. Hei 04/036, 167) and a method where enzyme is used (See, Japanese Patent Application Laid-Open (Kokai) No. Hei 04/278,063). As a method for giving smoothness to a fish paste product, a method where a transglutaminase and an alkali metal salt are used together has been known (See, Japanese Patent Application Laid-Open (Kokai) No. Hei 08/0,80,176). With regard to the problems of decrease of the water-holding capacity of meat and the yield by a processing treatment, an addition of polyphosphate and saccharide has been commonly known. Polyphosphate has an action of dissociation for myosin and actin which are muscle proteins and has a significant effect for improving the binding property and the yield of processed meat products. However, due to a concern such as its inhibiting action for absorbing calcium, there has been also a big demand of consumers for elimination of polyphosphate. Besides the above, with an object of improvement of the water-holding capacity and the gelling property of processed meat products or and fish meat products, there are a method where a transglutaminase is made to act thereon (See, Japanese Patent No. 2, 630, 829), a method where an aqueous solution of a mixture of calcium ion and alkali caseinate decomposed by a milk-clotting enzyme (See, Japanese Patent Application Laid-Open (Kokai) No. Hei 03/094, 624), a method where a solution containing sodium chloride and starch is absorbed with food (See, Japanese Patent Application Laid-Open (Kokai) No. Hei 06/343,424), etc. With regard to utilization of a protein deamidating enzyme to processed meat products and fish paste products, there has been known a method where soybean protein which is deamidated by a protein deamidating enzyme is added to sausage (See, Japanese Patent Application Laid-Open (Kokai) No. 2000/050,887). As such, concerning various problems in food processing as a result of denaturation of muscle proteins, various solving means have been adopted for each of the cases but, at the current days when needs of consumers are being diversified, the aforementioned measures are hardly said to be sufficient.

In Japanese Patent Application Laid-Open (Kokai) No. 2000/050, 887, it is described that a protein deamidating enzyme acts on meat protein such as myosin and actin. However, the description is only for the reactivity of a protein deamidating enzyme with meat protein and there is no specific description for the effect of the action of the enzyme on materials containing muscle protein. Thus, the art disclosed in the patent document is an art for improvement of functions (such as solubility, dispersing property, foaming property, stability of bubbles, emulsifying property and stability of emulsion) of separated protein to be added to food materials and there is neither description nor suggestion for the effect of the present invention which will be mentioned later, i.e., for the effect of improvement in yield after heating, suppressing effect for separation of water during storage and effect for improving the texture of processed meat products and fish paste products to be smooth, smooth and soft. In addition, deamidated soybean protein which is added as a material in the patent document is contained in the final product only a little and, further, the protein is prepared by a heating treatment at 80°C for 30 minutes and, therefore, the enzyme is inactivated and does not act on meat protein in sausage. Thus, from such a respect, it is apparent that the process of the patent document is different from the process method of the present invention.

JP 10 057013 A, JP 3 098552 A, WO 01/28353 A2, Okayama, T. et al.: "Effect of glutaminase preparation from Bacillus subtilis GT strain on sensory evaluation of processed meat products", Fleischwirtschaft, vol. 78, no. 1, 1998, pages 41-42, WO 2004/004489 A1, JP 2001 218590 A, WO 97/43910 A1, JP 8 080176, A, JP 7 184606 A, and JP 6 225704 A disclose a method for producing a processed meat product or a fish paste product, wherein a protein deamidating enzyme is added to a food material comprising a muscle protein and the enzyme acts upon the muscle protein, wherein the muscle protein is derived from livestock meat, poultry meat, fish meat, a mollusk or a crustacean, and wherein the amount of the protein deamidating enzyme added is 0.01 to 100 units per 1 g of the food material.

[Disclosure of the Invention]

The present invention provides a food wherein decrease of the yield and separation of water caused by the denaturation of the protein in processing (such as heating, freezing and cooling) of a food containing muscle proteins and in storage are suppressed, smooth and soft texture is maintained and deterioration of flavor and taste is suppressed, and also provides a method for producing such food.

The present inventors have extensively studied in view of the aforementioned problems and found that, when a protein deamidating enzyme is added to a food material comprising muscle proteins and is made to act thereon, it is possible to solve the aforementioned problems. Thus the present invention has been achieved. That is, the present invention is as follows.

[1] A method for producing a processed meat product or a fish paste product, wherein a protein deamidating enzyme having an action to deamidate a protein without cleavage of peptide bond and cross-linking of protein is added to a food material comprising a muscle protein and the enzyme acts upon the muscle protein.

[2] The method according to [1] above, wherein the muscle protein is derived from livestock meat, poultry meat, fish meat, a mollusk or a crustacean.

[3] The method according to [1] or [2] above, wherein the amount of the protein deamidating enzyme added is 0.01 to 100 units per 1 g of the food material.

[4] A processed meat product or a fish paste product produced by the method according to any one of [1] to [3] above.

[5] The use of a protein deamidating enzyme having an action to deamidate a protein without cleavage of peptide bond and cross-linking of protein as a meat tenderizer.

The protein deamidating enzyme in the present invention has an action to deamidate a protein without cleavage of peptide bond and cross-linking of protein, by acting directly on amide group of the protein. There is no particular limitation for its type so far as it has such an action. With regard to examples of such an enzyme, there are enzymes disclosed in Japanese Patent Application Laid-Open (<u>Kokai</u>) No. 2000/050,887 or in Japanese Patent Application Laid-Open (<u>Kokai</u>) No. 2001/021,850, but there is no particular limitation thereto. With regard to the protein deamidating enzyme, an enzyme prepared from culture liquid of a microorganism producing a protein deamidating enzyme may be used. There is no particular limitation for the microorganism used for the preparation of the protein deamidating enzyme.

With regard to a method for preparing a protein deamidating enzyme from culture liquid of a microorganism, publicly known methods for separation and purification of protein (such as centrifugal separation, UF concentration, salting-out and various chromatographies using ion-exchanger, etc.) may be used. For example, the culture liquid is centrifuged to remove cells and then subjected to a combination of salting-out, chromatography, etc. to give an aimed enzyme. In the recovery of the enzyme from inside of the cells, the cells are disintegrated by, for example, a pressurizing treatment or an ultrasonic treatment and then subjected to the same separation and purification as above whereupon the aimed enzyme is able to be prepared. It is also possible that the aforementioned series of steps (disintegration of cells, separation and purification) after the cells are previously recovered from the culture liquid by, for example, filtration and centrifugal treatment. The enzyme may be powderized by a drying method such as freeze-drying or vacuum drying and, at that time, an appropriate bulking agent or drying adjuvant may be used.

Activity of the protein deamidating enzyme according to the present invention is measured by a method which is a modification of method mentioned in Japanese Patent Application Laid-Open (<u>Kokai</u>) No. 2000/050,887 that is, by the following method.

(1) An aqueous solution (10 μl) containing a protein deamidating enzyme is added to 100 μl of 176 mM phosphate buffer (pH 6.5) containing 30 mM of Z-Gln-Gly, incubated at 37°C for 10 minutes and the reaction is stopped by an addition of 100 μl of 12% TCA solution.
(2) At that time, the enzyme concentration is adjusted to 0.05 mg/ml by an appropriate dilution with using 20 mM phosphate buffer (pH 6.0)and, after a centrifugal separation (12,000 rpm at 4°C for 5 minutes), the supernatant liquid is subjected to quantitative measurement of $NH_3$ by using F-kit Ammonia (manufacture by Roche).
(3) 10 μl of the supernatant liquid and 190 μl of 0.1 M triethanolamine buffer (pH 8.0) are added to 100 μl of a reagent II liquid (attachment to the F-kit), the mixture is allowed to stand at room temperature for 5 minutes and, by using 100 μl thereof, the absorbance at 340 nm is measured. To the residual 200 μl is added 1.0 μl of reagent III (attachment to F-kit; glutamate dehydrogenase), the mixture is allowed to stand at room temperature for 20 minutes and the absorbance at 340 nm of the residual 200 μl is measured. The concentration of ammonia in the reaction solution is determined from a calibration curve showing the relation between the ammonia concentration and the changes in absorbance (340 nm) prepared using the standard ammonia solution attached to F-kit.
(4) Measurement of the concentration of protein is carried out at a detection wavelength of 595 nm using a protein assay CBB (Cooumassie Brilliant Blue) solution (manufactured by Nakarai Tesk). BSA (Pierce) is used as a standard.
(5) The activity of a protein deamidating enzyme is determined by the following expression.

Specific Activity (U/mg) = [(Ammonia concentration (μmol/ml) in reaction solution) × (Amount (ml) of reaction solution) × (Diluted rate of enzyme)]/[(Amount (ml) of enzyme (solution)) × (Concentration (mg/ml) of protein) × (Reaction time (min))].

The muscle protein in the present invention is a plasma protein existing in muscle fiber, a myofibril protein participating in construction of muscle or a connective tissue protein existing in connective tissue. Examples of the plasma protein are albumin and myoglobin which are cytoplasm-soluble proteins and contain most of enzymes participating in glycolytic pathway. Examples of the myofibril protein are myosin, actin, actomyosin, tropomyosin, troponin and connectin which are main constituting components. Examples of the connective tissue protein are collagen and elastin which are main constituting proteins. A material in which the muscle protein is denatured by a treatment such as various processings such as gelatin prepared by denaturation of collagen is also included in a food material comprising muscle protein according to the present invention.

A food material comprising muscle protein is so-called meat which includes, for example, meat of livestock, poultry, fish meat or muscle of mollusk or crustacean and is the site including muscle, fat, blood, tendon, inner organ, marrow and brain excluding bone, tooth and nail. To be more specific, it is meat derived from animals such as cattle, pig and sheep, birds such as chicken, duck and ostrich, fish such as sardine, tuna, salmon and cod, mollusk such as octopus and cuttlefish, crustacean such as crab and shrimp, reptiles such as crocodile and snake and amphibian such as frog and there is no limitation for the type of the material used in the present invention.

Examples of the processed meat product which is processed using the aforementioned food material are ham, sausage, *chashu* (slices of roast pork), meat dumplings, hamburger, meat ball, meat loaf, roast beef, roast pork and the like. Cut meat, heated meat such as boiled and roasted ones and meat which is made tender either enzymatically or mechanically are also included therein. Examples of fish paste product are ground fish meat, *kamaboko*, crab *kamaboko, hampen* (white processed fish cake), *chikuwa* (a kind of fish sausage), deep-fried *kamaboko, tsumire* (fish dumplings), fish meat ham, fish meat sausage and fish meat ball although there is no particular limitation on the kind of products provided that it is a product comprising meat protein.

In the case of a paste product such as sausage and *kamaboko,* a method for adding a protein deamidating enzyme to a food material may be conducted in such a manner that enzyme solution or enzyme powder is added either solely or together with other material such as seasoning in a step of finely cutting, grinding and making into paste of the food material or that, after making into paste, enzyme solution or enzyme powder is added either solely or together with other material such as seasoning. In the case of ham or the like, the enzyme solution may be infused into the material meat or the material meat may be dipped into the enzyme solution. Alternatively, the enzyme solution or the enzyme powder may be sprinkled on the material meat. With regard to a mode of adding the enzyme, a previously mixed enzyme powder and powdery material may be used or the enzyme dissolved in a liquid such as seasoning solution may be used.

An addition amount of the protein deamidating enzyme to 1 g of food material or 1 g of meat material is preferably 0.01 to 100 units or, more preferably, 0.1 to 10 units. Although there is no particular limitation for the reaction condition (such as reaction time and temperature and pH of the reaction system) of the protein deamidating enzyme, preferred reaction temperature is 5 to 70°C. The pH of the reaction system is preferably 2 to 10, more preferably 4 to 8 and, still more preferably, 5 to 8. Reaction time is preferably 10 seconds to 5 days and, more preferably, 10 minutes to 24 hours. The conditions as such may be appropriately modified or adjusted depending, for example, upon purity of the enzyme used and on type, state, concentration, etc. of the protein comprised in the food material.

[Best Mode for Carrying Out the Invention]

The present invention will now be illustrated in more detail by way of the following Examples.

[Example 1]

In this Example, protein glutaminase derived from *Chryseobacterium* was used as a protein deamidating enzyme. The sequence of the protein glutaminase (EC.3.5.1) gene derived from *Chryseobacterium proteolyticum* has been determined already [Eur. J. Biochem. 268, 1410-1421 (2001)]. By referring to the sequence, conversion to codon having a high frequency for use in *Corynebacterium glutamicum* was conducted to construct a gene sequence as shown in SEQ ID NO: 1. The sequence contains a signal sequence (pre-region), pro-region of the protein glutaminase and regions encoding mature form of the protein glutamninase. The whole gene sequence thereof was prepared by synthesis. Based on the gene sequence information of the constructed SEQ ID NO: 1, primers of the sequences shown in SEQ ID NO: 5 (5'-CATGAAGAACCTTTTCCTGTC-3') and SEQ ID NO: 6 (5'-GTAAAAGGATCCATTAATTAAAATCC-3') were synthesized. The primer shown in SEQ ID NO: 5 contains the N-terminal sequence of the signal sequence of the protein glutaminase, while the primer shown in SEQ ID NO: 6 contains the C-terminal sequence of mature form of the protein glutaminase and recognition sequence of BamHI. Using DNA having a sequence shown in SEQ ID NO: 1 as a template, PCR was carried out using primers having sequences shown in SEQ ID NO: 5 and SEQ ID NO: 6 to amplify the pro-region of the protein glutaminase and regions encoding mature form of the protein glutamninase. The PCR fragment was inserted into SmaI site of pVC7 mentioned in Japanese Patent Application Laid-Open (Kokai) No. Hei 09/070,291 and then introduced into the competent cell (manufactured by Takara Shuzo) of *E. coli* JM109. Cells holding the plasmid where protein glutaminase gene is cloned was obtained and the plasmid was recovered. The nucleotide sequence of the fragment cloned to the plasmid was determined and confirmed to be identical with the sequence shown in SEQ ID NO: 1.

The sequence of TorA gene containing TorA signal peptide derived from *Escherichia coli* has been determined already (Mol. Microbiol. 11:1169-1179(1994)). By referring to the sequence, primers shown in SEQ ID NO: 7 (5' -ATGAACAATAACGATCTCTTTCAGG-3') and SEQ ID NO: 8 (5'-CCGGATCCTGGTCATGATTTCACCTG-3') were synthesized and, using chromosome DNA of *E. coli* W3110 strain prepared according to a common method (The method of Saito and Miura [Biochim. Biophys. Acta, 72, 619(1963)]) as a template, region encoding TorA and its signal sequence located its upstream were amplified by PCR method. Pyrobest DNA polymerase (manufactured by Takara Shuzo) was used in the PCR and the reaction condition in accordance with a protocol recommended by the manufacturer was used. Incidentally, the sequence of SEQ ID NO: 8 contains a recognition sequence of restriction enzyme BamHI. The DNA sequence encoding the signal sequence of TorA is shown in SEQ ID NO: 3.

Using a plasmid pPKSPTG1 mentioned in WO 01/23591 as a template, the region encoding the signal peptide and the promoter were amplified by conducting PCR using primers having sequences shown in SEQ ID NO: 9 (5'-AAATTCCTGTGAATTAGCTGATTTAG-3') and SEQ ID NO: 10 (5'-AAGAGATCGTTATTGTTCATAGAGGCGAAGGCTCCTTGAATAG-3'). The sequence of SEQ ID NO: 10 contains a sequence of 5'-terminal of gene encoding TorA signal peptide. After that, this PCR product and a PCR product containing a region encoding TorA and its signal sequence located in its upstream amplified by a primer having sequences of SEQ ID NO: 7 and SEQ ID NO: 8 were mixed in a ratio of 1:1 and, using that as a template, a crossover PCR was conducted using a primer having sequences shown in SEQ ID NO: 8 and SEQ ID NO: 9. As a result, a fused gene which contains a sequence containing PS2 promoter region, TorA signal sequence and a sequence encoding TorA was amplified. The crossover PCR product was digested with restriction enzymes ScaI and BamHI and subjected to an agarose gel electrophoresis to detect a DNA fragment of about 3.1 kbp. The DNA fragment was cut out from the agarose gel, recovered using EasyTrap Ver. 2 (manufactured by Takara Shuzo) and inserted into ScaI-BamHI site of the plasmid pPK4 mentioned in Japanese Patent Application Laid-Open (Kokai) No. Hei 09/322,774 to give a plasmid pPKT-TorA. When the nucleotide sequence of the gene sequence inserted into the plasmid was determined, it was confirmed that a predicted fused gene was constructed. Using the plasmid as a template, an area containing the promoter region of PS2 and a region encoding TorA signal peptide was amplified by PCR where primers having sequences of SEQ ID NO: 9 and SEQ ID NO: 11 (5'-GATTTCCTGGTTGCCGTTGGAATCCGCAGTCGCACGTCGCGGCG-3') were used. Incidentally, the sequence shown in SEQ ID NO: 11 has the 5'-terminal sequence of the region encoding the protein deamidating enzyme having a pro-region. After that, a region encoding the protein glutaminase having a pro-region was amplified by PCR using primers having sequences shown in SEQ ID NO: 6 and SEQ ID NO: 12 (5'-GATTCCAACGGCAACCAGGA-3') using a plasmid where the protein glutaminase is cloned as a template. Further, those PCR products were mixed in a ratio of 1:1 and, using it as a template, a crossover PCR was conducted using primers having sequences shown in SEQ ID NO: 6 and SEQ ID NO: 9 to amplify a fused gene with gene encoding the protein deamidating enzyme with a pro-region, TorA signal sequence and PS2 promoter region. The PCR product was digested with restriction enzymes ScaI and BamHI and subjected to an agarose gel electrophoresis to detect a DNA fragment of about 3.1 kbp. This DNA fragment was cut out from an agarose gel, recovered using EasyTrap Ver. 2 (manufactured by Takara Shuzo) and inserted into ScaI-BamHI site of the plasmid pPK4 mentioned in Japanese Patent Application Laid-Open (Kokai) No. Hei 09/322,774 to give a plasmid pPKT-PPG. A nucleotide sequence of the inserted sequence in the plasmid was determined and it was confirmed that a predicted fused gene was produced. Incidentally, an amino acid sequence of protein glutaminase having a pro-region is shown in SEQ ID NO: 2 while an amino acid sequence of TorA signal peptide is shown in SEQ ID NO: 4. However, it was predicted that, when maturation by a commercially available protease was conducted for native form of the protein glutaminase, the pro-sequence was not correctly cleaved. Therefore, "QTNK" which is a C-terminal sequence of the pro-sequence was replaced with "FGPK" so that cleavage of the pro-region took place so as to have the same sequence as N-terminal sequence of the native form of protein glutaminase. In replacing with "FGPK", primers having sequences shown in SEQ ID NO: 13 (5'-CTT GGG GCC GAA GCC CTT GAC TTC TTT GGT CAG -3') and SEQ ID NO: 14 (5'-TTC GGC CCC AAG TTG GCG TCC GTC ATT CCA GAT-3') were used. The sequence of SEQ ID NO: 13 is a primer for amplifying the pro-region while the sequence of SEQ ID NO: 14 is a primer for amplifying the mature form of the protein glutaminase. Using pPKT-PPG as a template, the pro-region of the protein glutaminase was amplified using primers having sequences shown in SEQ ID NO: 12 and SEQ ID NO: 13 while the mature form of the protein glutaminase was amplified using primers having sequences shown in SEQ ID NO: 14 and SEQ ID NO: 6. Further, those PCR products were mixed in a ratio of 1:1 and, using it as a template, a crossover PCR was conducted using primers having sequences shown in SEQ ID NO: 6 and SEQ ID NO: 12 to amplify protein glutaminase gene with the pro-region where the C-terminal of pro-sequence was replaced with FGPK. The crossover PCR product was cloned to *Sma*I site of pUC 18 (pUCPPG(FGPK)) and the nucleotide sequence thereof was confirmed whereupon the pro-sequence was replaced. After that, *Aat*II-*Bst*PI fragment (big) of pPKT-PPG and *Aat*II-*Bst*PI fragment (small) of pUCPPG(FGPK) were connected to construct pPKT-PPG(FGPK).

*C. glutamicum* ATCC 13869 was transformed using the constructed plasmid pPKT-PPG(FGPK) and a cell strain grown in a CM2G agar medium containing 25 mg/l of kanamycin was selected. The selected cell strain was incubated in an MM liquid medium containing 25 mg/l kanamycin at 30°C for 48 hours. A supernatant liquid after centrifugation of the incubated liquid of *C. glutamicum* was filtered through a filter (0.45 μm) and the filtrate was concentrated using an ultrafilter membrane (molecular weight of not more than 10,000 being excluded by that). Buffer exchange was conducted using 50 mM phosphate buffer (pH 7.5) and the pro-region of the protein deamidating enzyme was cleaved by trypsin to conduct maturation. After that, concentration and buffer exchange (20 mM acetate buffer, pH 5.0) were conducted again, the concentrated sample was subjected to a cation-exchange chromatography and the active fraction of the protein deamidating enzyme was recovered and used as a pure enzyme product. When the relative activity of the pure enzyme product was measured according to the method as has been described above, it was about 100 to 140 U/mg.

100 parts by weight of minced pork arm meat and 20 parts by weight of 10% saline were placed in a food cutter and mixed for 15 seconds and 5 parts by weight of water was added (control product). 100 parts by weight of minced pork arm meat and 20 parts by weight of 10% saline were placed in a food cutter and mixed and minced for 15 seconds and, after that, the aforementioned pure protein deamidating enzyme (100 U/mg) corresponding to 0.1 unit per 1 g of minced pork arm meat dissolved in 5 parts by weigh of water followed by mixing was added to the pork (Test product 1) . Similar to the case of the test product 1, pure protein deamidating enzyme corresponding to 0.2 unit, 1 unit or 10 units was added to 1 g of minced pork arm meat to prepare Test products 2, 3 or 4, respectively. The materials were placed together, the mixture was stirred using a spatula and mixed again for 15 seconds using a food cutter. Those operations of stirring and mixing were repeated four times, then filled in a collagen casing tube having a diameter of 3 cm and allowed to stand at 5°C for 1 hour. After that, it was dried in a dry atmosphere of 60°C for 40 minutes, boiled with steam at 75°C for 2 hours and cooled. Incidentally, in the enzyme-added products (Test products 1 to 4; all of them being the products of the present invention), it is likely that enzymatic reaction proceeds in a drying step while, in a boiling step with steam, most of the enzyme is inactivated. For the control product and Test products 1 to 4, yield after heating and physical property were measured and, further, texture and taste were evaluated by a sensory test. The yield after heating was expressed by "(weight after heating)/(weight before heating)" (%). With regard to the physical property, the Test product was sliced into columns of 3 cm height, a 5-mm ball was pierced at lmm/second into the cross section using a texture analyzer (TA.XT2i manufactured by Stable Microsystems) and a breaking strength at that time was measured. With regard to a sensory evaluation samples sliced in 3 cm thickness were eaten by eight trained panelists and hardness and smoothness at that time were evaluated. The result of the evaluation is shown in Table 1.

In the Test products 1 to 4, softness and smoothness were enhanced and their overall evaluation was also mostly enhanced as compared with the control product. In addition, the Test products 2 to 4 had a tendency that pudding-like texture was strong, the touch on the tongue was smooth, the cut side was with good luster and with fine texture and they showed a favorable quality as sausage of a finely cut type. Such an effect was significant when an adding amount of the protein deamidating enzyme per 1 g of the food material was 1 unit or more but, even when it was 0.1 unit, the effect was still recognizable. Further, when the control product and the Test product 3 were tightly sealed, boiled for 10 minutes in water of 90°C and subjected to a sensory test, the control product changed to hard texture while the test product 3 maintained its smooth texture.

Table 1: Sensory Evaluation Results of Sausage

| | Amount (unit(s)) of the Enzyme added to 1 g of Food Material | Breaking Strength (g) | Sensory Evaluation (Smooth Texture) | Sensory Evaluation (Total Evaluation) |
|---|---|---|---|---|
| Control Product | 0 | 373 | 3 | 3 |
| Test Product 1 (Product of the Invention) | 0.1 | 371 | 3.5 | 3.1 |
| Test Product 2 (Product of the Invention) | 0.2 | 341 | 4 | 3.9 |
| Test Product 3 (Product of the Invention) | 1 | 316 | 5 | 4.7 |
| Test Product 4 (Product of the Invention) | 10 | 310 | 5 | 4.8 |

[Example 2]

1000 g of ground fish meat prepared by disintegrating the frozen ground fish meat of FA grade into flakes was finely cut using a Stephan cutter and stirred (at low speed for 1.5 minutes, then at medium speed for 1.5 minutes and at high speed for 1.5 minutes). After that, 30 g of salt and 600 g of ice water were added thereto and the mixture was finely cut by Stephan cutter and stirred (at low speed for 1.0 minute, then at medium speed for 30 seconds and at high speed for 2 minutes). Then 50 g of potato starch "Esusan Ginrei" (manufactured by Ajinomoto), 50 g of sugar, 20 g of *mirin* (sweetened sake), 10 g of *umami* seasoning "Ajinomoto"(monosodium glutamate) (manufactured by Ajinomoto Co.) and the pure protein deamidating enzyme (100 U/mg) prepared by the method of Example 1 were added wherein the amount of the enzyme is corresponding to 5 units per gram of material ground fish meat, and the mixture was stirred again with Stephan cutter at a medium speed until the mixture temperature became 8 to 10°C. The ground fish meat prepared as such was filled in a non-transparent vinylidene casing tube, set by warming at 40°C for 40 minutes and heated at 85°C for 30 minutes to give a casing *kamaboko* (test product). As a control, *kamaboko* set by warming at 40°C for 40 minutes without addition of the enzyme was prepared by the same method (control product). The breaking strength and the strain when a 5-mm ball was pierced at 1 mm/sec into the cross section of the *kamaboko* using a texture analyzer were measured. In addition, yield after heating and state of separation of water after storing for two weeks were observed and a sensory evaluation was conducted. The result is shown in Table 2.

In the test product (product of the present invention), the breaking strength lowered and the strain increased as compared with the control product as shown in Table 2. Further, the product of the present invention changed to tender and smooth texture. When the weight wherefrom the separated water after heating was removed was measured, the product of the present invention showed less change in the weight and, as compared with the control product, the yield after heating was improved. On the other hand, the flavor, taste, etc. were nearly the same as those in the control product. Further, when the state of separation of water after being stored by cooling at 5°C for two weeks was observed, there was almost no separation of water in the steamed *kamaboko* of the present invention and the texture, flavor, taste, etc. were nearly the same as those before storing.

Table 2: Sensory Evaluation Results of Kamaboko

| | Test Product (Product of the Invention) | Control Product |
|---|---|---|
| Breaking Strength (g) | 601 | 645 |
| Strain (mm) | 19.1 | 13.3 |
| Weight before Heating (g) | 102.5 | 98.6 |
| Weight after Heating (g) | 101.2 | 90.8 |
| Yield upon Heating (%) | 98.7 | 92.1 |
| Water Separation Status after Storing for 2 Weeks | ± | +++ |
| Sensory Evaluation | ○○ | Δ |
| ○○: very favorable<br>○: favorable<br>Δ: normal<br>×: unfavorable<br>±: little<br>+++: much | | |

The *kamaboko* prepared by the same method as described above was subjected to an evaluation for compulsory separation of water. Tests were conducted for two items - water separation which took place after the treatment in an autoclave (at 121°C for 30 minutes) and that after freezing at -30°C followed by thawing. The rate of water separation was calculated as (weight (g) of separated water) / (weight (g) before the treatment) . The result is shown in Table 3. In all of the products of the present invention, the rate of water separation was suppressed and, particularly by addition of at least 0.2 units of the enzyme per gram of the material, water separation was significantly suppressed. As such, in the *kamaboko* prepared by addition of the protein deamidating enzyme, water separation was suppressed even when a treatment of water separation was apt to take place.

Table 3: Evaluation for Compulsory Separation of Water of Kamaboko

| Amount of Enzyme Added to 1 g of Fish Paste Material | Water Separation after Autoclaving (%) | Water Separation after Freezing-Thawing (%) |
|---|---|---|
| Nothing Added (Control Product) | 11.0 | 7.2 |
| 0.1 Unit (Product of the Invention) | 10.5 | 6.9 |
| 0.2 Unit (Product of the Invention) | 9 | 6.3 |
| 1 Unit (Product of the Invention) | 7.7 | 5.5 |

The *kamaboko* prepared by the same method as described above was subjected to an evaluation for water-holding capacity by measuring the loss of water upon heating using a microwave oven (500W; for 20 to 60 seconds). The result is shown in Table 4. When the protein deamidating enzyme was added in an amount of at least 0.1 unit to 1 g of the fish paste material, an amount of water loss can be suppressed and the effect increased depending upon the enzyme concentration. As compared with the *kamaboko* which was a control having dry and hard surface and many wrinkles, the product of the present invention was smooth maintaining a soft and smooth state. With regard to texture, the control product was hardened and lost in its smoothness while, in the product of the present invention, deterioration in softness and smoothness was hardly noted. It shows that, in the product of the present invention, evaporation of moisture by heating and deterioration of texture (becoming hard and losing the smoothness) are suppressed. From the result, improvement of quality of meat protein-containing food to which an excessive processing treatment such as retorting and stewing is applied can be expected by the present invention.

Table 4: Evaluation for Water-holding Capacity of Kamaboko

| Treating Time with Microwave Oven | Amount of Enzyme Added to 1 g of Fish Paste Material | | | |
|---|---|---|---|---|
| Time (sec.) | Control Product | 0.1 Unit (Product of the Invention) | 0.2 Unit (Product of the Invention) | 1 Unit (Product of the Invention) |
| 20 | 7.6 | 7.3 | 6 | 5.6 |
| 40 | 29.1 | 26.7 | 22.3 | 22.2 |
| 60 | 49.9 | 46.3 | 40.7 | 40.1 |
| Moisture Evaporation Rate (%) = [(Weight after Treating with Microwave Oven)/(Weight before Treating with Microwave Oven)] × 100 (unit: %) | | | | |

[Example 3]

100 parts by weight of Pork loin, 20 parts by weight of 10% saline and 5 parts by weight of water were combined and vacuum pouched, and then pickled by rotating in a tumbler for one night under a cooling condition (control product). The pure protein deamidating enzyme product (100 U/mg) prepared by the method mentioned in Example 1 was added to 1 g of pork loin in an amount corresponding to 0.1 unit, 1 unit or 5 units being dissolved

in water was used for pickling the pork loin in the same manner as in the case of the control product (Test products 1 to 3, respectively; all were the products of the present invention). On the next day, the product was filled in a non-transparent cylindrical vinylidene casing (diameter: 7 cm), dried in a dry atmosphere of 60°C for 60 minutes, smoked at 60°C for 30 minutes, steamed at 60°C for 2 hours and at 75°C for 30 minutes and cooled to prepare ham. With regard to the control product and Test products 1 to 3, the weight was measured excluding separated water, values of (weight after heating) / (weight before heating) in % was calculated and the yield upon heating was determined. Further, a sensory evaluation was conducted by eight panelists using the ham which was sliced in 2 mm thickness. In the sensory evaluation, smoothness of the sliced side of the ham was firstly evaluated by touching with hand and then the ham was eaten conducting the evaluation for hardness and moist feel in five ranks. The result of the test is shown in Table 5.

The yield of the products of the present invention upon heating increased as compared with the control product and the more added amount of the enzyme, the more effect. In addition, the sliced sides of the hams which were the products of the present invention were very smooth and the texture was soft as well. Further, in the products of the present invention, dry feel in biting was apparently little and swallowing times upon swallowing were few whereupon the products were evaluated to be easily swollen.

Table 5: Sensory Evaluation Result of Hams

| Amount of Enzyme added to 1 g of Material | Yield upon Heating (%) | Smoothness of Sliced Surface | Hardness | Moist Feel |
|---|---|---|---|---|
| - (Control Product) | 84.3 | 3 (basis) | 3 (basis) | 3 (basis) |
| 0:1 Unit (Product of the Invention) | 84.9 | 3 | 3 | 3.5 |
| 1 Unit (Product of the Invention) | 85.6 | 4 | 2 | 4 |
| 5 Unit (Product of the Invention) | 86.0 | 5 | 2 | 5 |

In the hams prepared by the same method as described above, the ham which prepared by addition of 1 unit of the enzyme to 1 g of the meat was tested for the separation of water upon re-heating. Thus, the ham which was subjected to a vacuum packing was heated in boiling water (100°C) for 5 minutes, the separated amount of water after heating was measured and rate of water separation was determined (Rate of water separation (%) = (Amount of separate water (%))/(Original weight (g)). The result is shown in Table 6. As compared with the control product, the ham of the present invention showed decreased rate of water separation. From the result, there is shown a possibility that water separation upon re-heating with an object of sterilization of the surface of the ham after packing is suppressed and that quality is improved.

Table 6: Water Separation upon Re-heating of Ham

| Amount of Enzyme added to 1 g of Meat | Water Separation Rate upon Heating (%) |
|---|---|
| Control product | 13.5 |
| 1 Unit (Product of the Invention) | 11.2 |

[Example 4]

Two kinds of dipping solutions were prepared according to the formulation shown in Table 7. That is, they are a dipping solution comprising a saline solution solely (control product) and a dipping solution containing the protein deamidating enzyme (test product). Tendons in blocks of pork loin used as a material were previously cut off, each weight was measured, 25 g of each dipping solution was added to 100 g of the meat material and the mixture was vacuum-packed. It was allowed to stand at 4°C for 12 hours so that the dipping solution was well diffused into the meat to give pickled meat. Each of two sides of the pickled meat was roasted for 1.5 minutes by a hot plate (about 160°C) to prepare a roasted meat. The yield after heating upon the roasting was determined according to the following formula.

Yield upon heating (%) = (Weight of solid part after heating)/(Total weight before heating)

A sensory evaluation by seven panelists was further conducted and evaluation was made in five ranks for "tenderness of the meat".

Table 8 shows the result of the yield after heating and of the sensory evaluation. As compared with the control product, the test product which was the pork using the dipping solution (the product of the present invention) showed increased yield upon heating. In addition, as compared with the control product, the test product which was the pork using the dipping solution (the product of the present invention) was juicy, showed tender texture and has a feel as if the meat lightly passed through the teeth with the fibrous texture inherent to the meat still maintained. Besides the pork loin, similar preparations were also conducted for beef sirloin and breast chicken meat and the similar results were obtained. Thus, meat can be made tender by the protein deamidating enzyme whereby the enzyme was confirmed to be able to be used as a meat tenderizer.

Table 7: Formulation of Dipping Solutions

| | Control Product | Test Product |
|---|---|---|
| Salt | 4.0% | 4.0% |
| Protein deamidating enzyme Solution (130 U/ml) | | 3.0% |
| Water | 96.0% | 93.0% |
| Total | 100% | 100% |

Table 8: Yield after Heating and Results of Sensory Evaluation

| | Weight before Heating (g) | Weight after Heating (q) | Yield (%) | Sensory Evaluation in Five Ranks (Average of 7 Persons) |
|---|---|---|---|---|
| Control Product | 88.2 | 59.2 | 67.1 | 3.0 |
| Test Product (Product of the Invention) | 87.5 | 61.0 | 70.0 | 4:8 |

[Comparative Example 1]

As shown in Example 4, it was found that the protein deamidating enzyme used in the present invention had the similar effect as a protease which is often used with an object of making the meat tender. Therefore, comparison with a protease was carried out. Thus, instead of the protein deamidating enzyme, a protease preparation (Papain, manufactured by Amano Enzyme) was dissolved in an amount of 0.01% to the dipping solution mentioned in the table and, according to the same manner as in Example 7, pickled meat products for pork loin and for breast meat of chicken were prepared. The pork loin was roasted while the breast meat of chicken was subjected to a vacuum packing followed by heating in boiling water for 10 minutes. When they were subjected to a sensory test, although all of the products using protease became tender in terms of hardness, fibrous feel inherent to the meat was deteriorated and the quality was different from the product of the present invention. Especially in chicken meat, degree of becoming tender was excessive and a part thereof was thawed whereby the product could not be enjoyed for its biting feel at all. As such, when a protease was used as a meat tenderizer, excessive softening and lowering in meat quality (taste and texture) were resulted when the reaction proceeded too much and, therefore, it is a problem that control for the reaction is very difficult. However, since the protein deamidating enzyme maintains an appropriate fibrous feel inherent to the meat, control of its reaction when used as a meat tenderizer is very easy and is hardly dependent upon the periods for distribution and preservation whereby it is now possible to supply a product having a stable quality. That is likely to be due to the fact that a softening mechanism of the protein deamidating enzyme is not decomposition of the meat protein but is mitigation of coagulation of meat protein upon heating.

[Industrial Applicability]

In accordance with the present invention, it can provide a food wherein decrease of the yield and separation of water caused by the denaturation of the protein in processing (such as heating, freezing and cooling) of a food containing muscle proteins and in storage are suppressed, smooth and soft texture is maintained and deterioration of flavor and taste is suppressed, and also it can provide a method for producing such food. Therefore, the present invention is quite useful in the field of food.

## Claims

1. A method for producing a processed meat product or a fish paste product, wherein a protein deamidating enzyme having an action to deamidate a protein without cleavage of peptide bond and cross-linking of protein is added to a food material comprising a muscle protein and the enzyme acts upon the muscle protein.

2. The method according to claim 1, wherein the muscle protein is derived from livestock meat, poultry meat, fish meat, a mollusk or a crustacean.

3. The method according to claim 1 or 2, wherein the amount of the protein deamidating enzyme added is 0.01 to 100 units per 1 g of the food material.

4. A processed meat product or a fish paste product produced by the method according to any one of claims 1 to 3.

5. The use of a protein deamidating enzyme having an action to deamidate a protein without cleavage of peptide bond and cross-linking of protein as a meat tenderizer.

## Patentansprüche

1. Verfahren zum Herstellen eines verarbeiteten Fleischprodukts oder eines Fischpastenprodukts, wobei ein Proteindeamidierungsenzym mit einer Wirkung, ein Protein ohne Spaltung einer Peptidbindung und Vernetzung des Proteins zu deamidieren, zu einem Muskelprotein enthaltenden Nahrungsmittelmaterial gegeben wird und das Enzym auf das Muskelprotein wirkt.

2. Verfahren nach Anspruch 1, wobei das Muskelprotein von Nutztierfleisch, Geflügelfleisch, Fischfleisch, einem Weichtier oder einem Krustentier stammt.

3. Verfahren nach Anspruch 1 oder 2, wobei die zugegebene Menge des Proteindeamidierungsenzyms 0,01 bis 100 Einheiten pro 1 g des Nahrungsmittelmaterials ist.

4. Verarbeitetes Fleischprodukt oder Fischpastenprodukt, hergestellt durch das Verfahren nach einem der Ansprüche 1 bis 3.

5. Verwendung eines Proteindeamidierungsenzyms mit einer Wirkung, ein Protein ohne Spaltung einer Peptidbindung und Vernetzung des Proteins zu deamidieren, als Fleischweichmacher.

**Revendications**

1. Procédé de production d'un produit de viande transformée ou d'un produit de pâte de poisson, dans lequel une enzyme désamidant une protéine ayant pour action de désamider une protéine sans clivage de liaison peptidique ni réticulation de la protéine est ajouté a un produit alimentaire comprenant une protéine musculaire et l'enzyme agissant sur la protéine musculaire.

2. Procédé selon la revendication 1, dans lequel la protéine musculaire provient de chair de bétail, de chair de volaille, de chair de poisson, d'un mollusque ou d'un crustacé.

3. Procédé selon la revendication 1 ou 2, dans lequel la quantité de l'enzyme désamidant une protéine ajoutée va de 0.01 à 100 unités par 1 g de produit alimentaire.

4. Produit de viande transformée ou produit de pâte de poisson produit par le procédé selon lune quelconque des revendications 1 à 3.

5. Utilisation de l'enzyme désamidant une protéine ayant pour action de désamider sans clivage de liaison peptidique ni réticulation de la protéine comme attendrisseur de viande.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 49020353 A
- JP 04148663 A
- JP 04036167 A
- JP 04278063 A
- JP 08080176 A
- JP 2630829 B
- JP 03094624 A
- JP 06343424 A
- JP 2000050887 A
- JP 10057013 A
- JP 3098552 A
- WO 0128353 A2
- WO 2004004489 A1
- JP 2001218590 A
- WO 9743910 A1
- JP 8080176 A
- JP 7184606 A
- JP 6225704 A
- JP 2001021850 A
- JP 09070291 A
- WO 0123591 A
- JP 0932277 A
- JP HEI09322774 B


### Non-patent literature cited in the description


- **OKAYAMA, T. et al.** Effect of glutaminase preparation from Bacillus subtilis GT strain on sensory evaluation of processed meat products. *Fleischwirtschaft,* 1998, vol. 78 (1), 41-42
- *Eur. J. Biochem.,* 2001, vol. 268, 1410-1421
- *Mol. Microbiol.,* 1994, vol. 11, 1169-1179
- **SAITO ; MIURA.** *Biochim. Biophys. Acta,* 1963, vol. 72, 619